# EUROPÄISCHE PATENTSCHRIFT

(11) **EP 2 890 882 B1**
(45) Veröffentlichungstag und Bekanntmachung des Hinweises auf die Patenterteilung: **13.12.2023**
(21) Anmeldenummer: 13756367.2
(22) Anmeldetag: 23.08.2013
(51) Int. Cl.: F02D 41/00, F02B 37/04, F02B 37/16, F02D 17/02, F02D 13/06, F02P 5/15, F02B 37/18

(54) **VERFAHREN UND STEUERUNGSEINRICHTUNG ZUR MOMENTNEUTRALEN UMSCHALTUNG ZWISCHEN ZWEI MOTORBETRIEBSZUSTÄNDEN IN EINER BRENNKRAFTMASCHINE MIT ABSCHALTBAREN ZYLINDERN UND MIT MINDESTENS EINEM ZUSCHALTBAREN VERDICHTER**
METHOD AND CONTROL ARRANGEMENT FOR A TORQUE NEUTRAL SWITCH BETWEEN TWO ENGINE OPERATING MODES OF AN INTERNAL COMBUSTION ENGINE WITH DEACTIVABLE CYLINDERS AND WITH AT LEAST ONE SWITCHABLE COMPRESSOR
MÉTHODE ET DISPOSITIF DE CONTRÔLE POUR EFFECTUER UN CHANGEMENT ENTRE DEUX MODES DE FONCTIONNEMENT DU MOTEUR D'UN MOTEUR À COMBUSTION INTERNE POURVU DE CYLINDRES DÉSACTIVABLES ET D'AU MOINS UN COMPRESSEUR D'APPOINT

(30) Priorität: 31.08.2012 DE 102012017275
(43) Veröffentlichungstag der Anmeldung: 08.07.2015
(73) Patentinhaber: Volkswagen Aktiengesellschaft, 38440 Wolfsburg (DE)
(72) Erfinder: HOFFMEYER, Henrik, 30161 Hannover (DE); LINDENKAMP, Nils, 38126 Braunschweig (DE)
(86) Internationale Anmeldenummer: PCT/EP2013/067499
(87) Internationale Veröffentlichungsnummer: WO 2014/033054

(56) Entgegenhaltungen:
- EP-A1- 1 816 326
- WO-A1-2013/045821
- DE-A1- 10 158 913
- DE-A1-102008 029 197
- US-A1- 2003 062 019
- US-A1- 2007 074 513
- US-A1- 2009 118 977
- US-A1- 2011 130 902
- US-A1- 2012 204 832

## Beschreibung

Die Erfindung betrifft ein Verfahren zur momentneutralen Umschaltung einer aufladbaren Brennkraftmaschine mit den Merkmalen gemäß dem Oberbegriff des Anspruchs 1. Des Weiteren betrifft die Erfindung eine Steuerungseinheit zur momentneutralen Umschaltung einer aufladbaren Brennkraftmaschine mit den Merkmalen gemäß dem Oberbegriff des Anspruchs 8 sowie eine aufladbare Brennkraftmaschine.

Die Zylinderabschaltung (ZAS) ist eine effektive Maßnahme zur Reduzierung eines Wirkungsgradverlustes einer Brennkraftmaschine, insbesondere eines Ottomotors, im Teillastbetrieb. ZAS stellt damit eine bedeutsame Technologie zur deutlichen Verbrauchsreduzierung der Brennkraftmaschine dar. Meist ist der nutzbare Kennfeldbereich mit ZAS begrenzt auf die sogenannte Sauger-Volllast im ZAS-Betrieb, da das Ansprechverhalten eines Abgasturboladers zu träge für eine ZAS-Schaltung im aufgeladenen Betrieb der Brennkraftmaschine ist. Im Allgemeinen ist der ZAS-Betrieb technisch sinnvoll bis zu einer Last, bei der sowohl im Vollmotorbetrieb als auch im Teilmotorbetrieb ein identischer Wirkungsgrad erreicht wird.

Um bei Brennkraftmaschinen mit hohem geometrischen Verdichtungsverhältnis, insbesondere größer als 12, die Klopfneigung zu reduzieren, kann ein reduzierter Liefergrad für den Einsatz eines Miller-Brennverfahrens notwendig sein. Diese Maßnahme geht allerdings mit einer reduzierten Sauger-Volllast einher und bewirkt in Konsequenz einen deutlich reduzierten nutzbaren Kennfeldbereich, in welchem ZAS durchgeführt werden kann. Gasdynamische Vorgänge, zum Beispiel die Trägheit der Luftsäule, während einer solchen Abschaltung reduzieren den effektiv nutzbaren Kennfeldbereich weiter.

Aus dem Dokument DE 10 2005 008 578 A1 sind ein Motor mit Zylinderabschaltung und ein Betriebsverfahren für diesen bekannt. Einzelne Zylinder können stillgelegt werden, indem die Einlass- und Auslassventile geschlossen werden und die Kraftstoffzufuhr unterbrochen wird. Zur Umschaltung in den Teilmotorbetrieb werden Drosseleinrichtungen entgegengesetzt betätigt, um das Drehmoment in den aktiven Zylindern vor Abschaltung der Zylinderventile aufrechtzuerhalten. Wenn zum Vollmotorbetrieb zurückgekehrt wird, werden die Zylinderventile wieder zugeschaltet, bevor die Drosseleinrichtung entgegengerichtet betätigt werden. Im Teilmotorbetrieb kann ein kleiner Superlader zusätzlich betrieben werden. Um das Drehmoment der verbleibenden Zylinder zu verstärken, so dass der Betriebsbereich vergrößert wird.

Im Dokument DE 101 48 347 A1 wird ein Verfahren zum Wechsel zwischen Vollmotorbetrieb und Teilmotorbetrieb eines mehrzylindrigen Verbrennungsmotors beschrieben. Im ersten Schritt erfolgt eine Drosselung der Leistung der zu deaktivierenden Zylinder und gleichzeitig eine Erhöhung der Leistung der nicht abzuschaltenden Zylinder derart, dass das vom Motor abgegebene Gesamtmoment einem vorgegebenen Sollmoment folgt. Im zweiten Schritt erfolgt eine Abschaltung der gedrosselten Zylinder über deren schaltbare Einlass- oder Auslassventile.

Die US 2009/118977 A1 beschreibt eine Betriebsstrategie für eine Brennkraftmaschine, die ausgehend von einem Betrieb mit relativ hoher Last (Drehmoment) zu einem Betrieb mit relativ geringer Last (Drehmoment) betrieben werden soll, wobei zur Erzielung eines möglichst geringen Drehmoments vorgesehen ist, einzelne oder alle der Zylinder der Brennkraftmaschine zu deaktivieren. Um bei diesem Betriebsübergang größere Drehmomentsprünge zu vermeiden ist vorgesehen, die zu deaktivierenden Zylinder einzeln nacheinander zu deaktivieren und gleichzeitig den Zündzeitpunkt nach früh zu verlagern.

Und schließlich offenbart die US 2007/074513 A1 eine Brennkraftmaschine, die mittels zwei Abgasturboladern aufgeladen ist und bei denen die mehreren Zylinder in verschiedenen Konfigurationen deaktivierbar sind. Da sich mit einer Deaktivierung einzelner Zylinder der Massenstrom von sowohl dem diesen Zylindern zugeführten Frischgas als auch von dem von den Zylindern abgeführten Abgas verändern kann, beschäftigt sich die US 2007/074513 A1 mit einer variablen Verschaltung der beiden Abgasturbolader, durch die in angepasster Form entweder nur einer oder beide Abgasturbolader (sowohl auf der Verdichter- als auch auf der Turbinenseite) primär angeströmt werden.

Die US 2003/062019 A1 beschreibt ein Verfahren zum Wechsel zwischen Vollmotorbetrieb und Teilmotorbetrieb eines mehrzylindrigen Verbrennungsmotors, bei dem wenigstens die Einlassventile oder die Auslassventile eines Zylinders oder einer Gruppe von Zylindern im Vollmotorbetrieb aktiviert und im Teilmotorbetrieb deaktiviert sind, wobei in einem ersten Schritt eine Drosselung der Leistung der zu deaktivierenden Zylinder und gleichzeitig eine Erhöhung der Leistung der anderen Zylinder so erfolgt, das das vom Motor abgegebene Gesamtmoment einem vorgegebenen Motorsollmoment folgt und wobei in einem zweiten Schritt eine Abschaltung der gedrosselten Zylinder über die schaltbaren Ein- oder Auslassventile erfolgt.

Das spätveröffentliche Dokument EP 2 766 586 A1 beschreibt ein Verfahren zur Umschaltung zwischen zwei Motorbetriebszuständen, wobei die Drosselklappe und der elektrische Verdichter gleichzeitig verwendet werden.

Aufgabe der vorliegenden Erfindung ist es, eine schnelle momentneutrale Umschaltung einer aufladbaren Brennkraftmaschine von einem ersten Motorbetriebszustand in einen zweiten Motorbetriebszustand zu ermöglichen.

Diese Aufgabe wird erfindungsgemäß durch ein Verfahren zur momentneutralen Umschaltung einer aufladbaren Brennkraftmaschine mit den Merkmalen gemäß Anspruch 1 gelöst. Vorteilhafte Weiterbildungen der Erfindung sind in den abhängigen Ansprüchen charakterisiert. Das erfindungsgemäße Verfahren zur momentneutralen Umschaltung einer durch eine Aufladevorrichtung aufladbaren Brennkraftmaschine, insbesondere in einem Kraftfahrzeug, mit einem Saugrohr, einer Mehrzahl von Zylindern und einem zuschaltbaren Verdichter, von einem ersten Motorbetriebszustand in einen zweiten Motorbetriebszustand umfasst wenigstens die folgenden Schritte: Im ersten Motorbetriebszustand wird die Brennkraftmaschine in einem aufgeladenen Zustand ohne den zuschaltbaren Verdichter betrieben. Zum Übergang vom ersten in den zweiten Motorbetriebszustand werden Einlassventile und/oder Auslassventile wenigstens eines der Zylinder stillgelegt, insbesondere geschlossen. Im ersten Motorbetriebszustand in einer Mehrzahl von Takten unmittelbar vor Stilllegung der Einlassventile und/oder Auslassventile, während denen die Brennkraftmaschine zum Druckaufbau, insbesondere mittels eines auf die Frischgaszufuhr an sämtliche Zylinder gleichwirkenden Drosselventils, zum Beispiel Drosselklappe, gedrosselt wird, wird der zuschaltbare Verdichter wenigstens zeitweise hinzugeschaltet. Dadurch wird ein zusätzlicher Druckaufbau im Saugrohr wenigstens teilweise vom zuschaltbaren Verdichter erzeugt. Die Einlassventile und/oder Auslassventile des wenigstens einen Zylinders sind im zweiten Motorbetriebszustand stillgelegt, insbesondere geschlossen.

Bevorzugt sind der erste Motorbetriebszustand ein Vollbetriebszustand der Brennkraftmaschine, in welchem sämtliche Zylinder in Betrieb sind, und der zweite Motorbetriebszustand ein Teilbetriebszustand der Brennkraftmaschine, in welchem nur eine Untermenge der Zylinder in Betrieb ist. Dass die Umschaltung momentneutral ist, ist besonders vorteilhaft, da dann die Umschaltung im Wesentlichen unmerklich erfolgt.

Der zuschaltbare Verdichter ist in bevorzugter Ausführungsform ein zuschaltbarer elektrisch angetriebener Verdichter (eBooster). Verbreitet werden elektrisch angetriebene Verdichter zur deutlichen Verbesserung des instationären Betriebsverhaltens von aufladbaren Brennkraftmaschinen eingesetzt. Durch eine definierte Einspeisung elektrischer Energie in die Aufladung kann unabhängig vom Betriebspunkt der Brennkraftmaschine und der an diesem Punkt vorherrschenden Abgasenthalpie ein gewünschter, insbesondere ausreichender Ladedruck zur Verfügung gestellt werden. Der Energiebedarf des elektrisch angetriebenen Verdichters kann dabei entweder von einem Generator oder einem geeigneten Speichermedium, zum Beispiel einer Batterie, gedeckt werden. Das nutzbare ZAS-Kennfeld kann dadurch in vorteilhafter Weise aufgeweitet werden.

Im erfindungsgemäßen Verfahren erfolgt eine Zylinderabschaltung über eine diskrete Stilllegung der Einlass- und/oder Auslassventile des oder der betreffenden Zylinder. Zur Sicherstellung einer Momentneutralität werden relevante Motorsteller, insbesondere eine Drosselklappe, für den zweiten Motorbetriebszustand vorgesteuert.

Bei der eigentlichen Abschaltung können der oder die stillzulegenden oder abzuschaltenden Zylinder (während des Einlasstakts) mit Frischgas gefüllt und anschließend verschlossen werden. Dieses Vorgehen führt dazu, dass im ersten Arbeitsspiel im zweiten Motorbetriebszustand (mit reduzierter Anzahl von arbeitenden Zylindern) zum einen ein Schleppmoment von den abgeschalteten Zylindern erzeugt wird und zum anderen die noch laufenden Zylinder eine reduzierte Füllung aufweisen, da vor der Abschaltung alle im ersten Motorbetriebszustand arbeitenden Zylinder Frischgas aus dem Saugrohr entnommen haben. Diese Vorgänge reduzieren das maximal darstellbare Moment beziehungsweise den effektiv nutzbaren ZAS-Kennfeldbereich im zweiten Motorbetriebszustand im Vergleich zum Moment beziehungsweise Kennfeldbereich im ersten Motorbetriebszustand.

Über einen kurzzeitigen Saugrohrdruckaufbau mittels des erfindungsgemäßen transienten Einsatzes eines zuschaltbaren Verdichters, insbesondere elektrisch angetriebenen Verdichters, kann diesem Effekt entgegengewirkt werden. Typischerweise kann eine Saugrohrdrucküberhöhung mittels des zuschaltbaren Verdichters innerhalb von bis zu 0,3 s, bevorzugt von 0,1 bis 0,15 s, erreicht werden. Dieser Ansprechzeit steht die Zeitdauer von circa 0,6 s für eine beispielhafte Zylinderabschaltung bei 2000 Umdrehungen pro Minute gegenüber. Die Saugrohrdruckerhöhung unterstützt kurzzeitig die Füllung der laufenden arbeitenden Zylinder und die Kompensation der auftretenden Füllungs- und Momentverluste. Als eine Weiterentwicklung kann darüber hinaus vorgesehen werden, dass ein Hysterese-Band zur ZAS-Umschaltung verwendet wird, wobei der zuschaltbare Verdichter kurz vor der Einleitung der Umschaltung bereits anlaufen kann.

Auf diese erfindungsgemäße Weise wird das Emissionsverringerungspotential beziehungsweise Energieeinsparpotential der Zylinderabschaltung erhöht.

Es ist besonders bevorzugt im erfindungsgemäßen Verfahren zur momentneutralen Umschaltung einer aufladbaren Brennkraftmaschine, wenn während der Mehrzahl von Takten ein Zündwinkel wenigstens eines der Zylinder in dem Maße nach spät verstellt wird, wie der Druckaufbau erfolgt, so dass das erzeugte Moment im Wesentlichen gleich bleibt. Auf diese Weise wird der Wechsel der Motorbetriebszustände möglichst unmerklich für den Nutzer der Brennkraftmaschine eingeleitet.

Die Spätstellung des Zündwinkels bei der momentneutralen Umschaltung der Motorbetriebszustände kann jedoch aufgrund der damit verbundenen Verschleppung zu einem ungünstigen Kraftstoffverbrauch während des Umschaltvorgangs bei Zylinderabschaltung führen. In der Folge kann das theoretische Kraftstoffeinsparpotential der Zylinderabschaltung, wie es beispielsweise an einem stationären Motorprüfstand festgestellt wird, im realen Fahrbetrieb nicht dargestellt werden. Durch den erfindungsgemäßen Einsatz des zuschaltbaren Verdichters kann der für die Zylinderabschaltung notwendige Saugrohrdruckaufbau wesentlich schneller erfolgen, wodurch die bezüglich des Wirkungsgrads ungünstige Phase des späteren Zündwinkels der Brennkraftmaschine deutlich verkürzt wird. Mit Hilfe des zuschaltbaren Verdichters kann damit das Kraftstoffeinsparpotential im realen Fahrbetrieb ausgeweitet werden.

Bevorzugt im erfindungsgemäßen Verfahren zur momentneutralen Umschaltung kann des Weiteren oder darüber hinaus nach Stilllegung der Einlassventile und/oder Auslassventile im zweiten Motorbetriebszustand die Brennkraftmaschine entdrosselt werden. In Ergänzung dazu kann bei oder unmittelbar nach dem Entdrosseln der Brennkraftmaschine der Zündwinkel wenigstens eines der Zylinder sprungartig nach früh verstellt werden.

Es hat sich herausgestellt, dass das erfindungsgemäße Verfahren zur momentneutralen Umschaltung bereits seine vorteilhafte Wirkung entfaltet, wenn innerhalb der Mehrzahl von Takten der zuschaltbare Verdichter (nur oder bloß) angerissen wird und dann ausläuft. Anders gesagt, das erfindungsgemäße Hinzuschalten des zuschaltbaren Verdichters kann sich auf ein (bloßes) Anreißen und dann Auslaufen beschränken beziehungsweise alleinig durch dieses dargestellt sein. Eine Ansprechzeit oder gewisse Trägheit des zuschaltbaren Verdichters bis zum Erreichen einer bestimmten Leistung stellt keine Hürde für den Einsatz des Verfahrens dar.

Eine erfindungsgemäße Steuerungseinheit zur momentneutralen Umschaltung einer aufladbaren Brennkraftmaschine mit einem Saugrohr, einer Mehrzahl von Zylindern, einem auf die Frischgaszufuhr an sämtliche Zylinder gleichwirkenden Drosselventil, einer Aufladevorrichtung, einem zuschaltbaren Verdichter und einem Drucksensor im Saugrohrist zur Ansteuerung der Brennkraftmaschine eingerichtet und umfasst einen Rechner mit einem Speicher, in welchem ein Programm abgelegt ist, das bei wenigstens abschnittsweiser Durchführung ein Verfahren zur momentneutralen Umschaltung der Brennkraftmaschine mit einzelnen Merkmalen oder Merkmalskombinationen gemäß der Darstellung in dieser Spezifikation bewirkt oder realisiert.

Bevorzugt ist mittels der erfindungsgemäßen Steuerungseinheit zur momentneutralen Umschaltung der zuschaltbare Verdichter ausgehend von einer Lichtmaschine, Lichtelektromaschine, der Brennkraftmaschine antreibbar.

Im Zusammenhang des erfinderischen Gedankens steht auch eine aufladbare Brennkraftmaschine, insbesondere eine Ottomaschine oder eine Dieselmaschine.

Die Aufladung kann insbesondere mittels eines oder mehrerer von der Brennkraftmaschine umfasster Abgasturbolader erfolgen. Eine erfindungsgemäße aufladbare Brennkraftmaschine umfasst eine erfindungsgemäße Steuerungseinheit mit einzelnen Merkmalen oder Merkmalskombinationen gemäß der Darstellung in dieser Spezifikation.

In bevorzugter Ausführungsform der Erfindung handelt es sich um eine aufladbare Brennkraftmaschine, bevorzugt eine Viertaktbrennkraftmaschine, die vier Zylinder aufweist, von denen die Einlassventile und/oder Auslassventile wenigstens zweier Zylinder im zweiten Motorbetriebszustand stillgelegt sind.

Besonders bevorzugt für die erfindungsgemäße aufladbare Brennkraftmaschine ist eine Ausführungsform mit einer Vorrichtung zur diskreten Umschaltung eines Hubverlaufes (Ventilhubkontur) der Einlassventile und/oder Auslassventile wenigstens eines der Zylinder. Diese Vorrichtung kann insbesondere ein System axial verschieblich angeordneter und/oder aufgenommener Nocken umfassen, welche paarweise Kurvenfolgerlaufbahnen aufweisen, die unterschiedliche Betätigungen wenigstens einer Gruppe der Einlass- und/oder Auslassventile bewirken oder Betätigungen unterlassen (AVS-System). Alternativ dazu kann es sich um einen vollvariablen Ventiltrieb handeln.

Besonders vorteilhaft ist der Einsatz des erfindungsgemäßen Verfahrens für aufgeladene Ottomotoren, insbesondere Ottoviertaktmotoren, die mit einem hochverdichteten Miller-Brennverfahren, insbesondere mit einem geometrischen Verdichtungsverhältnis größer als 12, betrieben werden.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: ein schematisches Ablaufdiagramm einer bevorzugten Ausführungsform des erfindungsgemäßen Verfahrens,
- Figur 2: im Teilbild A eine erste Ausführungsform einer Anordnung, mit welcher das erfindungsgemäße Verfahren durchführbar ist, und im Teilbild B eine zweite Ausführungsform einer Anordnung, mit welcher das erfindungsgemäße Verfahren durchführbar ist, und
- Figur 3: eine Skizze eines Landkraftfahrzeug mit einer erfindungsgemäßen Brennkraftmaschine mit erfindungsgemäßer Steuerungseinheit.

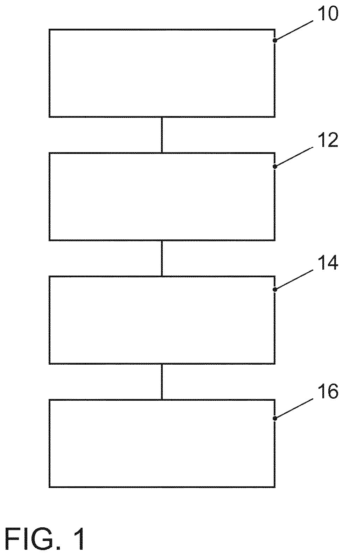

Die Figur 1 stellt ein schematisches Ablaufdiagramm einer bevorzugten Ausführungsform des erfindungsgemäßen Verfahrens in einer aufladbaren Brennkraftmaschine mit variablem Ventiltrieb, zum Beispiel einem AVS-System, dar. Zunächst erfolgt der Betreib der aufladbaren Brennkraftmaschine im ersten Motorbetriebszustand (Schritt 10), insbesondere im Vollbetriebszustand. Zur Vorbereitung der eigentlichen Umschaltung wird die Brennkraftmaschine während einer Mehrzahl von Takten, zum Beispiel sechs bis fünfzehn Takten, bevorzugt zehn Takten, gedrosselt, während erfindungsgemäß gleichzeitig der zuschaltbare Verdichter, bevorzugt ein elektrischer Verdichter, auch häufig als eBooster bezeichnet, hinzugeschaltet (Schritt 12), bevorzugt nur angerissen, wird, um einen zusätzlichen Druckaufbau im Saugrohr zu erzeugen. Der relative Wert des zusätzlichen Druckaufbaus hat sich an dem stillzulegenden Anteil am Zylindergesamtvolumen zu orientieren. Beispielsweise ist ein Druckaufbau auf das Doppelte erforderlich, wenn die Hälfte der Zylinder stillzulegen ist. Gleichzeitig können während der Mehrzahl von Takten die Zündwinkel der Zylinder in dem Maße nach spät verstellt werden, wie der Druckaufbau erfolgt, so dass das erzeugte Moment im Wesentlichen gleich bleibt. Der Druckaufbau kann mittels eines Drucksensors im Saugrohr gemessen werden. Dann werden Einlassventile und/oder Auslassventile wenigstens eines der Zylinder stillgelegt (Schritt 14), insbesondere der Hälfte der Zylinder. Auf diese Weise wird der Betrieb der aufladbaren Brennkraftmaschine im zweiten Betriebszustand (Schritt 16), insbesondere im Teilbetriebszustand, erreicht, wobei die Einlassventile und/oder Auslassventile des wenigstens einen Zylinders, insbesondere der Hälfte der Zylinder, im zweiten Motorbetriebszustand stillgelegt sind.

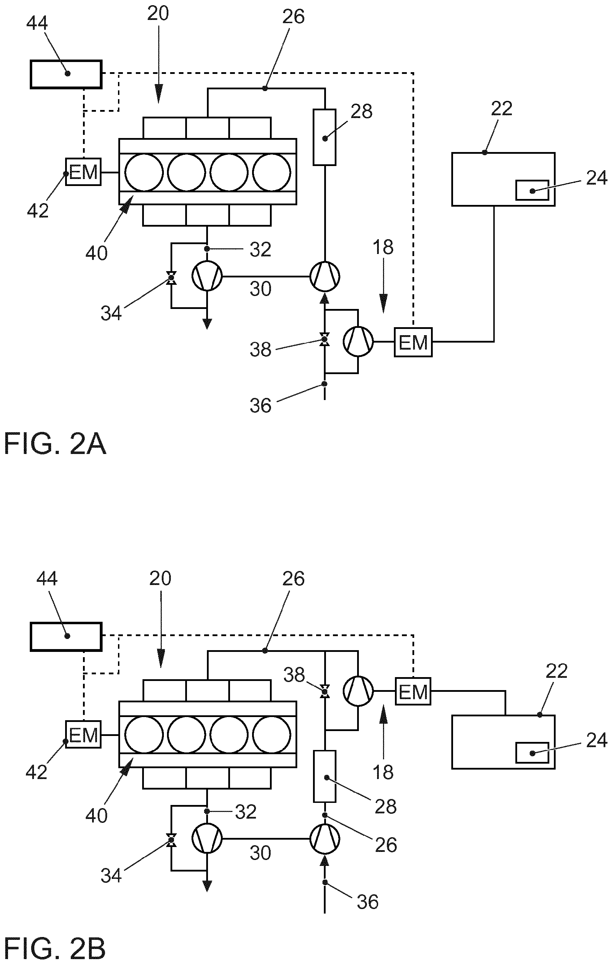

Die Figur 2 im Teilbild A zeigt eine erste Ausführungsform einer Anordnung, mit welcher das erfindungsgemäße Verfahren durchführbar ist. Der zuschaltbare Verdichter 18, insbesondere bevorzugt elektrisch angetriebene Verdichter, hier angedeutet durch den elektrischen Antrieb EM, kann prinzipiell vor oder nach einem Abgasturbolader 30 in der Luftzuführung der Brennkraftmaschine 20 positioniert werden. Die Ausführungsform im Teilbild A zeigt eine Anordnung des zuschaltbaren Verdichters 18 auf der Niederdruckseite stromaufwärts des Abgasturboladers 30. In dieser Ausführungsform ist die Brennkraftmaschine 20 ein Viertakt-Ottomotor mit vier Zylindern. Der zuschaltbare Verdichter 18 steht in Wirkverbindung mit einer Steuerungseinheit 22 zur Ansteuerung der Brennkraftmaschine 20. Die Steuerungseinheit 22 weist einen Rechner 24 auf, auf dem ein Computerprogramm ablaufen kann, welches das erfindungsgemäße Verfahren durchführt. Die Steuerungseinheit 22 kann insbesondere die Motorsteuerung oder ein Teil der Motorsteuerung sein.

Die Brennkraftmaschine 20 ist aufladbar: Auf der Gaszufuhrseite weist sie ein Saugrohr 26 mit einem bevorzugt darin integrierten Ladeluftkühler 28 auf. Grundsätzlich wird der Druck im Saugrohr 26 von einem Abgasturbolader 30 erzeugt, dessen Verdichter Frischgas in das Saugrohr 26 pumpt. Der Abgasturbolader 30 schöpft seine Antriebsenergie aus der Enthalpie des Abgases, welches die Zylinder über eine Abgasleitung 32 verlässt, indem ein Turbinenrad vom Abgasstrom angetrieben wird. Das Turbinenrad ist zumindest für einen Teilstrom des Abgases über ein steuerbares Wastegate 34, ein Ventil, umgehbar. Die Frischgasleitung 36 verzweigt sich in einen ersten Weg, der zum Verdichterrad des zuschaltbaren Verdichters führt, und in einen zweiten Weg, der direkt zum Verdichterrad des Abgasturboladers 30 führt. Im zweiten Weg ist auch ein Drosselventil 38, bevorzugt eine Drosselklappe, angeordnet, so dass die Frischgaszufuhr zur Brennkraftmaschine 20 steuerbar und/oder regelbar ist. Das Drosselventil 38 wirkt auf die Frischgaszufuhr an sämtliche Zylinder gleich.

Die Brennkraftmaschine 20 umfasst neben einem ZAS-fähigen Zylinderkopf auch einen variablen Ventiltrieb 40. Des Weiteren gibt es eine Lichtmaschine 42, deren generierte elektrische Energie in einer Batterie 44 gespeichert wird. Der in dieser Ausführungsform bevorzugt elektrisch angetriebene zusätzliche Verdichter 18 erhält seine Betriebsenergie aus dieser Batterie 44.

Die Figur 2 im Teilbild B zeigt eine zweite Ausführungsform einer Anordnung, mit welcher das erfindungsgemäße Verfahren durchführbar ist. Für gleiche Bauteile, insbesondere mit denselben Funktionalitäten, wie in der ersten Ausführungsform im Teilbild A sind dieselben Bezugszeichen verwendet. Im Hinblick auf eine möglichst schnelle Füllungskompensation beziehungsweise Saugrohrdruckerhöhung ist eine Anordnung des zuschaltbaren Verdichters 18 stromab des Abgasturboladers 30 (also auf der Hochdruckseite), insbesondere möglichst dicht am oder integriert im Saugrohr 26, zu bevorzugen, da das vom zuschaltbaren Verdichter 18 zu füllende Totvolumen reduziert wird, so dass ein vergleichsweise schnelles Ansprechen, insbesondere schneller als in einer Konfiguration gemäß der ersten Ausführungsform in Teilbild A erreichbar ist.

In der zweiten Ausführungsform in Teilbild B ist bevorzugt und besonders vorteilhaft im Hinblick auf den zur Verfügung stehenden Bauraum der zuschaltbare Verdichter 18 im Saugrohr 26 integriert, wie auch der Ladeluftkühler 28.

An dieser Stelle sei noch angemerkt, dass die erfindungsgemäße Brennkraftmaschine zusätzlich noch eine (steuerbare und/oder regelbare) Abgasrückführung, auf der Hochdruckseite und/oder auf der Niederdruckseite, aufweisen kann.

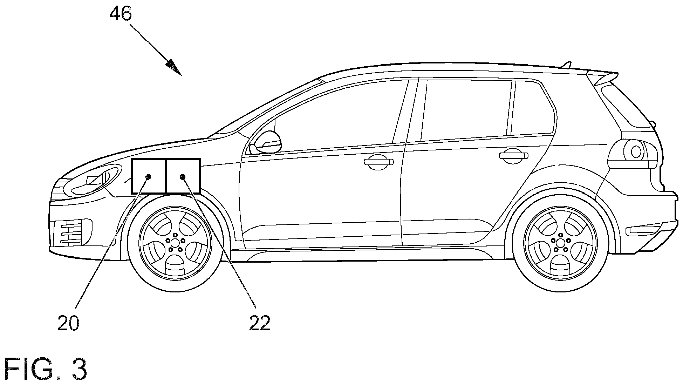

In der Figur 3 ist ein Landkraftfahrzeug mit einer erfindungsgemäßen Brennkraftmaschine 20 mit erfindungsgemäßer Steuerungseinheit 22 skizziert. Das Landkraftfahrzeug weist eine Brennkraftmaschine 20 im Vorderwagen auf. Die Steuerungseinheit 22 ist ebenfalls dort aufgenommen.

### Bezugszeichenliste

- 10: Betrieb im ersten Motorbetriebszustand
- 12: gedrosselter Betrieb mit zugeschaltetem zuschaltbaren Verdichter
- 14: Stilllegen von Einlass- und/oder Auslassventilen
- 16: Betrieb im zweiten Motorbetriebszustand
- 18: zuschaltbarer Verdichter
- 20: Brennkraftmaschine
- 22: Steuerungseinheit
- 24: Rechner
- 26: Saugrohr
- 28: Ladeluftkühler
- 30: Abgasturbolader
- 32: Abgasleitung
- 34: Wastegate
- 36: Frischgasleitung
- 38: Drosselventil
- 40: Variabler Ventiltrieb
- 42: Lichtmaschine
- 44: Batterie
- 46: Landfahrzeug

## Patentansprüche

1. Verfahren zur momentneutralen Umschaltung einer durch eine Aufladevorrichtung aufladbaren Brennkraftmaschine (20) mit einem Saugrohr (26), einer Mehrzahl von Zylindern und einem zuschaltbaren Verdichter (18), von einem ersten Motorbetriebszustand in einen zweiten Motorbetriebszustand, wobei im ersten Motorbetriebszustand die Brennkraftmaschine in einem aufgeladenen Zustand ohne den zuschaltbaren Verdichter betrieben wird (10) und zum Übergang vom ersten in den zweiten Motorbetriebszustand Einlassventile und/oder Auslassventile wenigstens eines der Zylinder stillgelegt werden (14) und die Einlassventile und/oder Auslassventile des wenigstens einen Zylinders im zweiten Motorbetriebszustand stillgelegt sind, wobei im ersten Motorbetriebszustand in einer Mehrzahl von Takten unmittelbar vor Stilllegung der Einlassventile und/oder Auslassventile die Brennkraftmaschine zum Druckaufbau gedrosselt wird (16),
**dadurch gekennzeichnet,**
**dass** der zuschaltbare Verdichter (18) während der Mehrzahl von Takten wenigstens zeitweise hinzugeschaltet wird, um einen zusätzlichen Druckaufbau im Saugrohr (26) zu erzeugen.

2. Verfahren zur momentneutralen Umschaltung einer aufladbaren Brennkraftmaschine (20) gemäß Anspruch 1,
**dadurch gekennzeichnet,**
**dass** während der Mehrzahl von Takten ein Zündwinkel wenigstens eines der Zylinder in dem Maße nach spät verstellt wird, wie der Druckaufbau erfolgt, so dass das erzeugte Moment im Wesentlichen gleich bleibt.

3. Verfahren zur momentneutralen Umschaltung einer aufladbaren Brennkraftmaschine (20) gemäß Anspruch 1,
**dadurch gekennzeichnet,**
**dass** nach Stilllegung der Einlassventile und/oder Auslassventile im zweiten Motorbetriebszustand die Brennkraftmaschine entdrosselt wird.

4. Verfahren zur momentneutralen Umschaltung einer aufladbaren Brennkraftmaschine (20) gemäß Anspruch 3,
**dadurch gekennzeichnet,**
**dass** bei oder unmittelbar nach dem Entdrosseln der Brennkraftmaschine der Zündwinkel wenigstens eines der Zylinder sprungartig nach früh verstellt wird.

5. Verfahren zur momentneutralen Umschaltung einer aufladbaren Brennkraftmaschine (20) gemäß Anspruch 1,
**dadurch gekennzeichnet,**
**dass** innerhalb der Mehrzahl von Takten der zuschaltbare Verdichter (18) angerissen wird und dann ausläuft.

6. Verfahren zur momentneutralen Umschaltung einer aufladbaren Brennkraftmaschine (20) gemäß Anspruch 1,
**dadurch gekennzeichnet,**
**dass** der erste Motorbetriebszustand ein Vollbetriebszustand der aufladbaren Brennkraftmaschine (20), in welchem sämtliche Zylinder in Betrieb sind, und der zweite Motorbetriebszustand ein Teilbetriebszustand der aufladbaren Brennkraftmaschine (20), in welchem nur eine Untermenge der Zylinder in Betrieb ist, ist.

7. Verfahren zur momentneutralen Umschaltung einer aufladbaren Brennkraftmaschine (20) gemäß Anspruch 1,
**dadurch gekennzeichnet,**
**dass** die aufladbare Brennkraftmaschine (20) in einem Miller-Brennverfahren betrieben wird.

8. Steuerungseinheit zur momentneutralen Umschaltung einer durch eine Aufladevorrichtung aufladbaren Brennkraftmaschine (20), wobei die Brennkraftmaschine ein Saugrohr (26), eine Mehrzahl von Zylindern, ein auf die Frischgaszufuhr an sämtliche Zylinder gleichwirkendes Drosselventil (38), eine Aufladevorrichtung, einen zuschaltbaren Verdichter (18) und einen Drucksensor im Saugrohr (26), aufweist, wobei die Steuerungseinheit (22) zur Ansteuerung der Brennkraftmaschine (20) eingerichtet ist und einen Rechner (24) mit einem Speicher umfasst,
**dadurch gekennzeichnet,**
**dass** in dem Speicher ein Programm abgelegt ist, das bei wenigstens abschnittsweiser Durchführung ein Verfahren zur momentneutralen Umschaltung der Brennkraftmaschine (20) gemäß einem der vorstehenden Ansprüche 1 bis 5 bewirkt.

9. Steuerungseinheit zur momentneutralen Umschaltung einer aufladbaren Brennkraftmaschine (20) gemäß Anspruch 8,
**dadurch gekennzeichnet,**
**dass** der zuschaltbare Verdichter (18) ausgehend von einer Lichtmaschine (42) der Brennkraftmaschine antreibbar ist.

10. Aufladbare Brennkraftmaschine (20),
**gekennzeichnet durch**
eine Steuerungseinheit zur momentneutralen Umschaltung gemäß Anspruch 8.

11. Aufladbare Brennkraftmaschine (20) gemäß Anspruch 10,
**dadurch gekennzeichnet,**
**dass** der zuschaltbare Verdichter (18) ein elektrisch angetriebener Verdichter ist.

12. Aufladbare Brennkraftmaschine (20) gemäß Anspruch 10,
**gekennzeichnet durch**
ein geometrisches Verdichtungsverhältnis größer als 12.

13. Aufladbare Brennkraftmaschine (20) gemäß Anspruch 10,
**dadurch gekennzeichnet,**
**dass** die Brennkraftmaschine (20) vier Zylinder aufweist, von denen die Einlassventile und/oder Auslassventile wenigstens zweier Zylinder im zweiten Motorbetriebszustand stillgelegt sind.

14. Aufladbare Brennkraftmaschine (20) gemäß Anspruch 10,
**gekennzeichnet durch**
eine Vorrichtung zur diskreten Umschaltung eines Hubverlaufes der Einlassventile und/oder Auslassventile wenigstens eines der Zylinder.

## Claims

1. Method for the torque-neutral switching of an internal combustion engine (20), which can be charged by a charging device, comprising an intake pipe (26), a plurality of cylinders and a connectable compressor (18), from a first motor operating state into a second motor operating state, in the first motor operating state, the internal combustion engine being operated in a charged state without the connectable compressor (10), and inlet valves and/or outlet valves of at least one of the cylinders being shut down (14) in order to transition from the first motor operating state into the second motor operating state, and the inlet valves and/or outlet valves of the at least one cylinder being shut down in the second motor operating state, in the first motor operating state, in a plurality of cycles immediately before the inlet valves and/or outlet valves are shut down (16), the internal combustion engine being throttled to build up pressure.
**characterized in that**
the connectable compressor (18) is at least temporarily switched on during the plurality of cycles in order to generate an additional pressure build-up in the intake pipe (26).

2. Method for the torque-neutral switching of a chargeable internal combustion engine (20) according to claim 1,
**characterized in that**
during the plurality of cycles, an ignition angle of at least one of the cylinders is adjusted so as to be retarded to the extent that the pressure builds up, such that the generated torque remains substantially the same.

3. Method for the torque-neutral switching of a chargeable internal combustion engine (20) according to claim 1,
**characterized in that**
after the inlet valves and/or outlet valves have been shut down in the second motor operating state, the internal combustion engine is dethrottled.

4. Method for the torque-neutral switching of a chargeable internal combustion engine (20) according to claim 3,
**characterized in that**
during or immediately after the dethrottling of the internal combustion engine, the ignition angle of at least one of the cylinders is adjusted such as to be abruptly advanced.

5. Method for the torque-neutral switching of a chargeable internal combustion engine (20) according to claim 1,
**characterized in that**
within the plurality of cycles the connectable compressor (18) is started up and then stops.

6. Method for the torque-neutral switching of a chargeable internal combustion engine (20) according to claim 1,
**characterized in that**
the first motor operating state is a full operating state of the chargeable internal combustion engine (20) in which all cylinders are in operation, and the second motor operating state is a partial operating state of the chargeable internal combustion engine (20) in which only a subset of the cylinders is in operation.

7. Method for the torque-neutral switching of a chargeable internal combustion engine (20) according to claim 1,
**characterized in that**
the chargeable internal combustion engine (20) is operated in a Miller combustion process.

8. Control unit for the torque-neutral switching of an internal combustion engine (20) which can be charged by a charging device, the internal combustion engine having an intake pipe (26), a plurality of cylinders, a throttle valve (38) which acts in the same way on the fresh gas supply to all cylinders, a charging device, a connectable compressor (18) and a pressure sensor in the intake pipe (26), the control unit (22) being configured to control the internal combustion engine (20) and comprising a computer (24) having a memory,
**characterized in that**
a program is stored in the memory which, when it is at least partially carried out, brings about a method for the torque-neutral switching of the internal combustion engine (20) according to any of the preceding claims 1 to 5.

9. Control unit for the torque-neutral switching of a chargeable internal combustion engine (20) according to claim 8,
**characterized in that**
the connectable compressor (18) can be driven starting from a generator (42) of the internal combustion engine.

10. Chargeable internal combustion engine (20),
**characterized by**
a control unit for the torque-neutral switching according to claim 8.

11. Chargeable internal combustion engine (20) according to claim 10,
**characterized in that**
the connectable compressor (18) is an electrically driven compressor.

12. Chargeable internal combustion engine (20) according to claim 10,
**characterized by**
a geometric compression ratio greater than 12.

13. Chargeable internal combustion engine (20) according to claim 10,
**characterized in that**
the internal combustion engine (20) has four cylinders of which the inlet valves and/or outlet valves of at least two cylinders are shut down in the second motor operating state.

14. Chargeable internal combustion engine (20) according to claim 10,
**characterized by**
a device for discrete switching of a stroke profile of the inlet valves and/or outlet valves of at least one of the cylinders.

## Revendications

1. Procédé permettant la commutation indépendamment du couple d'un moteur à combustion interne (20) pouvant être suralimenté par un dispositif de suralimentation et comportant un tuyau d'aspiration (26), une pluralité de cylindres et un compresseur (18) pouvant être mis en service, d'un premier état de fonctionnement de moteur vers un second état de fonctionnement de moteur, dans lequel, dans le premier état de fonctionnement de moteur, le moteur à combustion interne fonctionne dans un état suralimenté sans le compresseur pouvant être mis en service (10) et, lors de la transition du premier au second état de fonctionnement de moteur, des soupapes d'admission et/ou des soupapes d'échappement d'au moins l'un des cylindres sont arrêtées (14) et les soupapes d'admission et/ou les soupapes d'échappement de l'au moins un cylindre sont arrêtées dans le second état de fonctionnement de moteur, dans lequel, dans le premier état de fonctionnement de moteur, dans une pluralité de cycles, immédiatement avant l'arrêt des soupapes d'admission et/ou des soupapes d'échappement, le moteur à combustion interne est étranglé pour la montée de la pression (16),
**caractérisé en ce que**
le compresseur (18) pouvant être mis en service est mis en service au moins temporairement pendant la pluralité de cycles, afin de générer une montée de pression supplémentaire dans le tuyau d'aspiration (26).

2. Procédé permettant la commutation indépendamment du couple d'un moteur à combustion interne (20) pouvant être suralimenté selon la revendication 1,
**caractérisé en ce que**
pendant la pluralité de cycles, un angle d'allumage d'au moins l'un des cylindres est réglé de manière à être retardé au fur et à mesure que la montée de pression se produit, de sorte que le couple généré reste sensiblement le même.

3. Procédé permettant la commutation indépendamment du couple d'un moteur à combustion interne (20) pouvant être suralimenté selon la revendication 1,
**caractérisé en ce que**
après l'arrêt des soupapes d'admission et/ou des soupapes d'échappement dans le second état de fonctionnement de moteur, le moteur à combustion interne n'est plus étranglé.

4. Procédé permettant la commutation indépendamment du couple d'un moteur à combustion interne (20) pouvant être suralimenté selon la revendication 3,
**caractérisé en ce que**
pendant ou immédiatement après la fin de l'étranglement du moteur à combustion interne, l'angle d'allumage d'au moins l'un des cylindres est réglé de manière à être avancé brusquement.

5. Procédé permettant la commutation indépendamment du couple d'un moteur à combustion interne (20) pouvant être suralimenté selon la revendication 1,
**caractérisé en ce que**
dans la pluralité de cycles, le compresseur (18) pouvant être mis en service est fissuré puis fuit.

6. Procédé permettant la commutation indépendamment du couple d'un moteur à combustion interne (20) pouvant être suralimenté selon la revendication 1,
**caractérisé en ce que**
le premier état de fonctionnement de moteur est un état de fonctionnement complet du moteur à combustion interne (20) pouvant être suralimenté dans lequel tous les cylindres sont en fonctionnement, et le second état de fonctionnement de moteur est un état de fonctionnement partiel du moteur à combustion interne (20) pouvant être suralimenté dans lequel seul un sousensemble des cylindres est en fonctionnement.

7. Procédé permettant la commutation indépendamment du couple d'un moteur à combustion interne (20) pouvant être suralimenté selon la revendication 1,
**caractérisé en ce que**
le moteur à combustion interne (20) pouvant être suralimenté fonctionne selon un procédé de combustion de Miller.

8. Unité de commande pour la commutation indépendamment du couple d'un moteur à combustion interne (20) pouvant être suralimenté par un dispositif de suralimentation, dans laquelle le moteur à combustion interne présente un tuyau d'aspiration (26), une pluralité de cylindres, une soupape d'étranglement (38) agissant de manière uniforme sur la conduite d'amenée de gaz frais sur tous les cylindres, un dispositif de suralimentation, un compresseur (18) pouvant être mis en service et un capteur de pression dans le tuyau d'aspiration (26), dans laquelle l'unité de commande (22) est configurée pour la commande du moteur à combustion interne (20) et comprend un ordinateur (24) comportant une mémoire,
**caractérisée en ce que**
un programme est stocké dans la mémoire, lequel, lorsqu'il est mis en oeuvre au moins partiellement, exécute un procédé permettant la commutation indépendamment du couple du moteur à combustion interne (20) selon l'une des revendications précédentes 1 à 5.

9. Unité de commande pour la commutation indépendamment du couple d'un moteur à combustion interne (20) pouvant être suralimenté selon la revendication 8,
**caractérisée en ce que**
le compresseur (18) pouvant être mis en service peut être entraîné à partir d'une génératrice (42) du moteur à combustion interne.

10. Moteur à combustion interne (20) pouvant être suralimenté,
**caractérisé par**
une unité de commande pour la commutation indépendamment du couple selon la revendication 8.

11. Moteur à combustion interne (20) pouvant être suralimenté selon la revendication 10,
**caractérisé en ce que**
le compresseur (18) pouvant être mis en service est un compresseur entraîné électriquement.

12. Moteur à combustion interne (20) pouvant être suralimenté selon la revendication 10,
**caractérisé par**
un taux de compression géométrique supérieur à 12.

13. Moteur à combustion interne (20) pouvant être suralimenté selon la revendication 10,
**caractérisé en ce que**
le moteur à combustion interne (20) présente quatre cylindres dont les soupapes d'admission et/ou les soupapes d'échappement d'au moins deux cylindres sont arrêtées dans le second état de fonctionnement de moteur.

14. Moteur à combustion interne (20) pouvant être suralimenté selon la revendication 10,
**caractérisé par**
un dispositif permettant la commutation discrète de la levée des soupapes d'admission et/ou des soupapes d'échappement d'au moins l'un des cylindres.
